# EUROPEAN PATENT APPLICATION

(11) **EP 4 345 644 A1**
(43) Date of publication of application: **03.04.2024**
(21) Application number: 22198491.7
(22) Date of filing: 28.09.2022
(51) Int. Cl.: G06F 16/29

(54) **PROCESSING SPATIALLY REFERENCED DATA**

(71) Applicant: xyzt.ai BV, 3000 Leuven (BE)
(72) Inventor: Adams, Bart, 3110 Rotselaar (BE); Joly, Lida Lea Jean, 1560 Hoeilaart (BE)
(74) Representative: IP HILLS NV

(57) **Abstract**

Example embodiments relate to a computer implemented method for compressing spatial data records (220), wherein a respective spatial data record (221) comprises a spatial reference (222) within a space (218), and at least one attribute value (223) of at least one attribute type. The method comprises meshing (201) the space in meshing elements (230 - 245), wherein a relative position of a meshing element is characterized by a relative spatial reference (255). The method further comprises parsing (202) the spatial data records, comprising, for a respective spatial data record: compressing (203) the spatial reference to the relative spatial reference of the meshing element in which the spatial reference is located; and compressing (204) the at least one attribute value to at least one respective numerical value (224) according to at least one attribute dictionary (225) comprising a mapping between attribute values and numerical values for an attribute type.

## Description

### Field of the Invention

The present invention generally relates to processing spatially referenced data.

### Background of the Invention

The location of real-world assets such as cars, planes, vessels, containers, and people can be tracked in time to generate spatially and temporally referenced data. These assets may be pinpointed in space and time by means of Bluetooth Low Energy, BLE, cellular triangulation, computer vision, or a global positioning system, GPS. An increasing number of assets is being tracked, resulting in vast amounts of spatially referenced data.

Spatial analysis software typically allow to interact with spatially referenced data stored in a database, e.g. by generating data visualizations. This can allow identifying trends, patterns, and phenomena to obtain insights into, for example, traffic flows, maritime circulation, people flows, and air traffic. Most interactions with the spatially referenced data require querying or searching the entire database, which results in substantial processing times. To cope with the vast amounts of data, the spatial analysis software is typically run on hardware that is optimized to process the spatially referenced data, e.g. a plurality of Graphic Processing Units, GPUs. This results in a large overhead and limited scalability as the hardware is costly.

In addition to the spatial information, the spatially referenced data may include attributes or metadata, e.g. speed, tire pressure, or cargo. Spatial analysis software typically requires clean data that is structured according to a predetermined format. To this end, the spatially referenced data is typically pre-processed. This can be time and resource intensive as the pre-processing may at least partially be performed manually, e.g. by a data engineer. It is thus a problem to efficiently process spatially referenced data.

### Summary of the Invention

It is an object of the present invention, amongst others, to solve or alleviate the above identified problems and challenges by improving the processing of spatially referenced data.

According to a first aspect, this object is achieved by a computer implemented method for compressing spatial data records, wherein a respective spatial data record comprises a spatial reference within a space, and at least one attribute value of at least one attribute type. The method comprises meshing the space in meshing elements, wherein a relative position of a meshing element is characterized by a relative spatial reference. The method further comprises parsing the spatial data records, comprising, for a respective spatial data record: compressing the spatial reference to the relative spatial reference of the meshing element in which the spatial reference is located; and compressing the at least one attribute value to at least one respective numerical value according to at least one attribute dictionary comprising a mapping between attribute values and numerical values for an attribute type.

Parsing the spatial data records refers to recursively processing respective spatial data records from a dataset, i.e. ingesting the respective spatial data records one by one. A spatial reference characterizes a physical location, e.g. by a set of coordinates according to any coordinate system. The spatial reference may, for example, include x, y, and z coordinates representing longitude, latitude, and elevation on the surface of the Earth, respectively.

The relative spatial reference is indicative for the position of a meshing element according to a relative reference frame, which may be characterized by a point of reference, one or more axes, and/or a scale for the one or more axes. The point of reference, also origin, may be an outer end of the meshed space, e.g. an outer corner of the meshed space. The one or more axes may extend from the origin along one or more respective outer edges of the meshed space. The scale may be defined by the meshing elements along the one or more axes, i.e. the units of the one or more axes may be expressed in meshing elements. As such, the relative spatial reference may characterize the relative position of a meshing element by means of one or more integer values. For example, the relative spatial references may have the form (*α*, *β*), wherein *α* is the distance of a meshing element to a first axis expressed in a number of meshing elements, and *β* is the distance of the meshing element to a second axis expressed in a number of meshing elements.

This allows compressing the spatial reference of a spatial data record to the relative spatial reference of the meshing element in which the spatial reference is located. In doing so, a more memory efficient representation of the spatial reference is obtained as the relatively memory intensive spatial reference, e.g. floating-point values such as longitude and latitude, are compressed to the more memory efficient relative spatial reference, i.e. integer values.

The at least one attribute value may be of any data type, e.g. Boolean, integer, floating point, fixed point, character, or string. The at least one attribute type may be indicative for a feature of a real-world asset, e.g. speed, acceleration, tire pressure, name, identifier, length, width, cargo, destination. Alternatively or complementary, the at least one attribute type may be a timestamp or a temporal reference, indicative for the moment in time that the spatial data record is recorded.

The at least one attribute dictionary allows compressing attribute values of any data type and any attribute type, as distinct attribute dictionaries are generated for respective attribute types. Preferably, the at least one attribute dictionary maps the at least one attribute value to integer numerical values. As such, a more memory efficient representation of the at least one attribute value is obtained by compressing the at least one attribute value to the at least one respective numerical value based on the at least one attribute dictionary. This allows compressing and processing spatially referenced data that includes any type of attributes or metadata, i.e. in a data agnostic manner, without substantial data pre-processing.

Compressing the spatial data records thus reduces the memory used to store the spatial data records as the size of the respective spatial data records is reduced. This has the advantage that it can improve the scalability and interactivity of processing spatial data records as operations on the compressed spatial data records can be performed faster and more efficient. Processing the spatial data records may include, amongst others, interacting with, visualizing, organising, searching, structuring, modifying, retrieving, inspecting, using, or analysing the spatial data. It is a further advantage that the overhead of computing resources and the cost for processing the spatial data records can be reduced. It is a further advantage that the time to insights can be reduced, as any spatially referenced data can be compressed without substantial data pre-processing. It is a further advantage that the at least one attribute value can be reconstructed from the compressed spatial data records, i.e. the compressing of the at least one attribute value is lossless. It is a further advantage that the computer implemented method can be executed by typical hardware components.

According to an embodiment, a respective spatial data record may comprise a plurality of attribute values of respective attribute types; wherein a plurality of numerical values is obtained by compressing the plurality of attribute values; and wherein the parsing further comprises, for a respective spatial data record, compressing the plurality of numerical values to a state value according to a state dictionary comprising a mapping between sets of numerical values and respective state values.

A spatial data record may thus include information on a plurality of features of a real-world asset relative to its position. As such, a plurality of attribute dictionaries may map the attribute values of the respective attribute types to numerical values. In doing so, a set of numerical values is obtained for the respective spatial data records. In addition to the attribute dictionaries, a state dictionary may map the unique sets of numerical values to state values. Preferably, the state values may be integer values. This can further reduce the memory used to store the spatial data records as the size of the respective spatial data records is further reduced. This has the further advantage that the spatial data records can be searched substantially fast, as evaluating the plurality of attribute values of the spatial data records can be avoided by performing a search based on the state values of the spatial data records.

According to an embodiment, parsing the spatial data records may further comprise generating the at least one attribute dictionary and/or the state dictionary.

The at least one attribute dictionary and/or the state dictionary may thus be generated while parsing the spatial data records, i.e. on the fly. Generating the at least one attribute dictionary and/or state dictionary may include creating a dictionary for a previously unencountered attribute type and/or adding a mapping, e.g. a key-value pair, for a previously unencountered attribute value or unique set of numerical values to an existing dictionary. The at least one attribute dictionary and/or the state dictionary may be stored in addition to the compressed spatial data records.

According to an embodiment, the at least one attribute dictionary may further comprise a mapping between intervals of attribute values and numerical values, or between one or more characters and numerical values.

A plurality of attribute values within an interval may thus be mapped to a single numerical value, e.g. attributes values within interval '[-5,5]' may be mapped to numerical value 1. The size of the intervals determines the granularity of the respective attribute type in the compressed spatial data. The intervals may be predetermined, e.g. provided by a user.

According to an embodiment, meshing a space may further comprise meshing the space in meshing elements having equal surface areas according to a predetermined resolution.

The predetermined resolution of the meshing elements may, for example, be characterized by a predetermined shape and dimensions for the meshing elements. The predetermined resolution may be the finest resolution to which the spatial references can be compressed without losing valuable spatial information. The predetermined resolution may thus depend on the spatial data being processed.

According to an embodiment, parsing the spatial data records may further comprise, for a respective spatial data record, assigning the relative spatial reference and the at least one numerical value or, when depending on claim 2, the state value to a data structure associated with the space for storing compressed spatial data records comprising a spatial reference located within the space.

Thus, the compressed spatial data records may be stored in a data structure associated with the meshed space. A compressed spatial data record may include the relative spatial reference, and the at least one numerical values and/or the state value. The data structure may, for example, store the compressed spatial data records in key-value pairs. Herein, the relative spatial reference may be the key of a key-value pair, while the at least one numerical value or the state value may be assigned to the value of the key-value pair.

According to an embodiment, parsing the spatial data records may further comprise, if a size of the data structure associated with the space exceeds a size threshold, dividing a space into subspaces, and dividing the data structure associated with the space in data sub-structures associated with the respective subspaces for storing compressed spatial data records comprising a spatial reference located within the respective subspaces.

The size threshold may, for example, be a maximum number of compressed spatial data records stored in the data structure, or a maximum number of bytes stored in the data structure. The space may be divided into subspaces based on the spatial distribution of the spatial data records located within the space, e.g. such that a substantially similar number of spatial data records are included in the respective subspaces. Alternatively, the space may be divided based on the size of the compressed spatial data records, based on symmetry, based on the meshing elements of the space, or according to any other space-dividing criterion known to the skilled person. The subspaces may preferably be non-overlapping. A subspace obtained by dividing the space may further be divided into one or more subspaces. In other words, dividing a space in subspaces may be performed recursively.

The obtained data sub-structures may then comprise the compressed spatial data records with spatial references located within the respective subspaces. This allows dividing a substantially large number of spatial data records between a plurality of data sub-structures. This can further improve the processing of spatial data records as operations on the compressed spatial data records can be performed faster and more efficient by limiting the operations to a relevant portion of the spatial data records, i.e. one or more data sub-structures.

According to an embodiment, dividing a space into subspaces may further comprise
- meshing the respective subspaces in meshing elements, wherein a relative position of a meshing element within a subspace is characterized by a relative sub-spatial reference;
- updating the relative spatial references with the relative sub-spatial references; and
- assigning the relative sub-spatial references and the at least one numerical value or, when depending on claim 2, the state value to the data sub-structure.

The subspaces obtained by dividing a meshed space may thus in turn be meshed into meshing elements, i.e. in a substantially similar manner as meshing the space. In doing so, the subspaces may obtain respective reference frames that allow describing the relative position of spatial data records within the respective subspaces, i.e. by means of the relative sub-spatial references.

According to an embodiment, the computer implemented method may further comprise obtaining relative sub-spatial references according to at least one lower resolution by aggregating meshing elements of the predetermined resolution.

The at least one lower resolution may thus be a lower or coarser resolution compared to the predetermined resolution. In other words, the surface area of meshing elements according to the at least one lower resolution is larger compared to the surface area of meshing elements according to the predetermined resolution. This allows obtaining different spatial compression levels of the spatial data records. It is a further advantage that this can improve the efficiency and interactivity of visualizing the compressed spatial data records, as an appropriate spatial compression level can be selected for generating the visualisation.

According to an embodiment, the computer implemented method may further comprise obtaining aggregated subspaces that include a predetermined number of meshing elements of the at least one lower resolution; and obtaining aggregated data structures associated with the aggregated subspaces for storing compressed spatial data records comprising a spatial reference located within the aggregated subspaces.

According to an embodiment, dividing a space may be performed according to a space partitioning tree.

The space partitioning tree may comprise a root node, a plurality of internal nodes, and a plurality of leaf nodes. The nodes of the space partitioning tree may be indicative for the data structures and data sub-structures for storing compressed spatial data records comprising spatial references located within the associated spaces and subspaces. The space partitioning tree may for example be a binary space partitioning tree, a quadtree, an octree, or a k-d tree.

According to an embodiment, the computer implemented method may further comprise:
- receiving a request for a digest of spatial data records located within an inspection space;
- fetching one or more data sub-structures associated with the subspaces that at least partially overlap with the inspection space; and
- generating the digest by rendering the numerical values of at least one attribute type on the meshing elements within the inspection space based on the relative spatial references.

The requested digest may be a compilation or summary, e.g. a visualisation, of the spatial data records located within the inspection space. The inspection space may be a portion of a space in which spatial data records are available, i.e. located. The digest may for example be a raster graphic such as a choropleth map, that visualises the attribute values of at least one attribute type of spatial data records with a spatial reference located within the inspection space. The magnitude of the attribute values may further be visualised by colour maps, or colour scales. Alternatively, the generated digest may only render the location of the compressed spatial data record, i.e. the relative spatial reference, by marking the meshing elements within the inspection space. This marking may be binary, i.e. marked or not marked, or this marking may be according to a colour scale that is indicative for the number of spatial data records with a spatial reference located within a meshing element.

To generate the digest, it may thus be sufficient to fetch data sub-structures associated with subspaces that at least partially overlap with the inspection space. This allows generating a digest or visualizing spatially referenced data more efficiently and faster, as spatial data records unnecessary for generating the digest can be ignored. This has the further advantage that the interactivity of analysing the spatial data can be improved, as loading times for generating digests may be reduced. Similarly, filtering or searching the database of compressed spatial data records can be more efficient and faster, as the search can be restricted to the data sub-structures associated with subspaces that at least partially overlap with the inspection space, i.e. without searching the entire database.

According to an embodiment, the fetching may further comprise:
- determining a resolution for the digest based on the inspection space;
- selecting the predetermined resolution or the at least one lower resolution based on the determined resolution; and
- fetching, based on the selected resolution, one or more data sub-structures, or one or more aggregated data structures.

Thus, an appropriate spatial compression level of the spatial data records can be selected based on the scale of the requested digest, i.e. the inspection space. For example, upon requesting a digest with an inspection space that covers Europe it may be inefficient to retrieve compressed spatial data with meshing elements according to the finest resolution, i.e. the predetermined resolution. By the large scale of the inspection space, compressed spatial data with meshing elements according to a substantially lower resolution, i.e. larger meshing elements, can be retrieved and rendered without losing substantial fidelity. This has the further advantage that the improved interactivity of analysing spatial data is maintained even when a digest is requested that comprises a substantial number of spatial data records.

According to an embodiment, generating the digest may further comprise decoding the state values of the compressed spatial data records to the plurality of numerical values based on the state dictionary.

The state dictionary may thus be fetched from storage in addition to the compressed spatial data records within the data sub-structures, such that the state values can be decoded to sets of numerical values for rendering the digest. Alternatively, the state values may be rendered on the meshing elements within the inspection space based on the relative spatial references, i.e. without decoding to sets of numerical values.

According to an embodiment, the request for a digest further comprises a selection of attribute types to be rendered; and wherein generating the digest is limited to rendering the attribute types included in the selection.

The request may thus limit the rendered digest to one or more attribute types of interest, e.g. by only rendering 'speed' or 'acceleration' values, and ignoring other attribute types in the fetched compressed spatial data records. The compressed spatial data records in the fetched data sub-structures may for example be filtered based on a bit-set. Alternatively, the rendered digest may be limited to a range of attribute values of interest.

According to a second aspect, the invention relates to a data processing system configured to perform the computer implemented method according to the first aspect.

According to a third aspect, the invention relates to a computer program comprising instructions which, when the program is executed by a computer, cause the computer to perform the computer implemented method according to the first aspect.

According to a fourth aspect, the invention relates to a computer-readable medium comprising instructions which, when executed by a computer, cause the computer to perform the computer implemented method according to the first aspect.

### Brief Description of the Drawings

Fig. 1 shows a schematic illustration of some functionalities of an example spatial analysis computer program;
Fig. 2 shows steps according to a computer implemented method for compressing spatial data records;
Fig. 3 shows steps of the computer implemented method wherein the spatial data records comprise a plurality of attribute values of different attribute types, according to embodiments;
Fig. 4 shows steps of the computer implemented method to divide a space into subspaces, and to divide the data structure associated with the space in data sub-structures associated with the subspaces, according to embodiments;
Fig. 5 shows steps of the computer implemented method to generate a requested digest of compressed spatial data records, according to embodiments; and
Fig. 6 shows an example embodiment of a suitable computing system for performing steps according to example aspects of the disclosure.

### Detailed Description of Embodiment(s)

Spatially referenced data, also referred to as spatial data or geospatial data, is any information about an object, asset, event, or phenomenon indicative for its location, e.g. on Earth's surface. In addition to this spatial information, spatially referenced data may further comprise other information on the object, asset, event, or phenomenon relative to its location, i.e. attributes or metadata. For example, a spatially referenced data record that is indicative for the location of a vehicle may comprise attributes such as, for example, speed, acceleration, and tire pressure of the vehicle at that location. Additionally, spatially referenced data may also comprise a temporal reference indicative for the moment in time when the spatially reference data record is obtained or registered, e.g. a timestamp. As such, spatial-temporal data allows monitoring dynamic objects, assets, events, or phenomenon. For example, spatial-temporal data of vehicles can allow analysing traffic flows.

Geographic information systems, GIS, typically process spatially referenced data. Throughout this patent application, 'processing spatially reference data' may refer to, amongst others, interacting with spatial data, visualizing spatial data, organising spatial data, searching for spatial data in a database, structuring spatial data, modifying spatial data, retrieving spatial data from a database, inspecting spatial data, using spatial data, or analysing spatial data. A GIS typically also allows ingestion of spatially referenced data, i.e. manipulation of spatial data for storage. To this end, a GIS typically includes software tools for ingesting spatially referenced data; a database for storing spatially referenced data; software tools for managing, analysing, and visualising, i.e. processing, the stored spatially referenced data; and hardware to run the software tools, e.g. compute servers. Most GISs are configured for specific use-cases and application domains, i.e. to ingest and process a specific type of spatial data.

In contrast, spatial analysis software, also referred to as GIS software, is typically a general-purpose computer program configured to be used in different use-cases and application domains. Spatial analysis software provides users with functionalities for ingesting and processing spatially referenced data. Examples of such spatial analysis software are ArcGIS, QGIS 3, GeoMedia, Spectrum Spatial, AutoCAD Map 3D, Maptitude GIS, Heavy.AI 6.0, Easy Trace, and eSpatial. Spatial analysis software may be a desktop application or a web application. In the latter case, the software is typically offered as Software as a Service, SaaS, and may run on remote hardware that is optimized to process the vast amounts of spatially referenced data, e.g. a remote compute server comprising a plurality of Graphic Processing Units, GPUs.

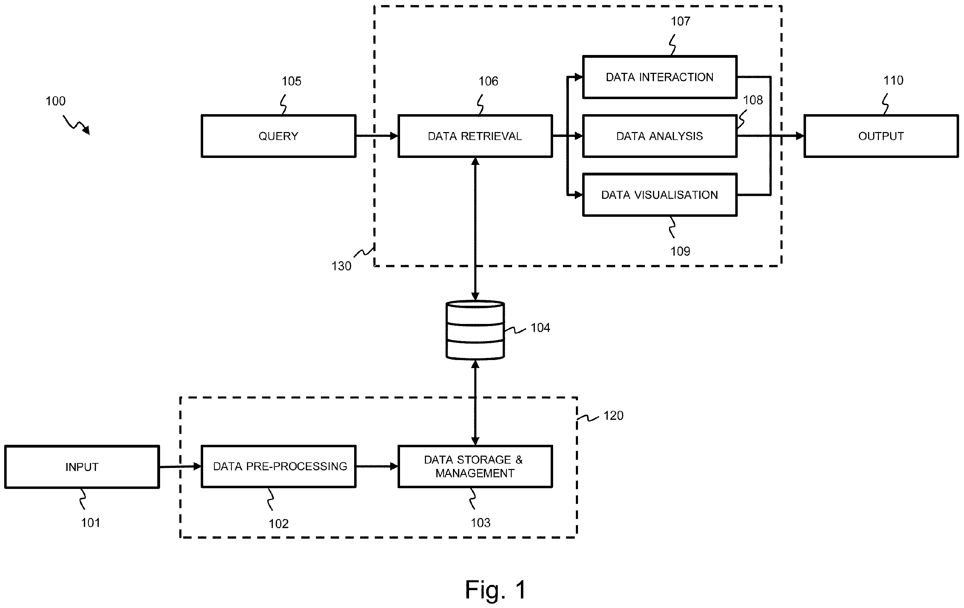

Fig. 1 shows a schematic illustration 100 of some functionalities of an example spatial analysis software program. Spatially referenced data may be provided to the spatial analysis software as input 101 for data ingestion 120. The spatial data may be collected through surveying, remote sensing, volunteered geographic information, location-based services, global positioning systems, and/or from existing spatial data sources. For example, the spatial data may be collected by a maritime automatic identification system, AIS, that regularly transmits the position, status, and activity of maritime vessels by means of a transceiver, or the spatial data may be floating vehicle data. Typically, a substantial amount of spatially referenced data is inputted to the spatial analysis software.

The collected data may be pre-processed 102 to extract, clean-up, edit, and/or slice the input data 101 such that is structured according to a format that is compatible with the spatial analysis software. This pre-processing step 102 may at least partially be performed manually, e.g. by a data engineer. As such, the pre-processing 102 may be time and resource intensive.

Next, the pre-processed spatial data may be organized and stored in a database 104. Database 104 may be a general-purpose database, such as a relational database, that has been configured to include spatial data, i.e. a spatial database. Database 104 may further be configured to enable tools for querying and analysing the spatial data. For example, database 104 may use spatial indices to optimize spatial queries that allow efficient handling of queries about distances between spatial data points, or whether spatial data points fall within an area of interest.

Upon providing such a query 105 to the spatial analysis software, the relevant spatial data can be retrieved 106 from the database 104 by searching the database. Typically, a substantial portion or the entire database 104 is searched when executing a query 105, which results in substantial processing times. To limit the processing time of querying the database, the spatial analysis software is typically run on hardware optimized to search the vast amount of spatially referenced data stored in the database 104, e.g. a compute server comprising a plurality of Graphic Processing Units, GPUs. This results in a large overhead and a limited scalability as the hardware is costly.

The spatial analysis software may further provide functionalities to interact 107, analyse 108, and visualise 109 the retrieved spatial data. For example, an interactive map may be generated as the output 110 of the spatial analysis software. This can allow conceptualizing the spatially referenced data and identifying trends, patterns, and phenomena to, for example, obtain insights into traffic flows, maritime circulation, people flows, or air traffic.

A problem of spatial analysis software is to efficiently ingest different types of spatial data, e.g. spatial data with different formats or relating to different assets. Another problem is that processing queries is time consuming as typically a substantial portion of the database or the entire database has to be searched. This may result in substantial loading times, thereby limiting the interactivity when analysing the spatial data. This may further result in limited scalability, as analysing a large number of spatial data records or searching a large database may result in excessive loading times. The description below discloses a computer implemented method that solves or alleviates the above identified problems by improving the ingesting and processing of spatially reference data.

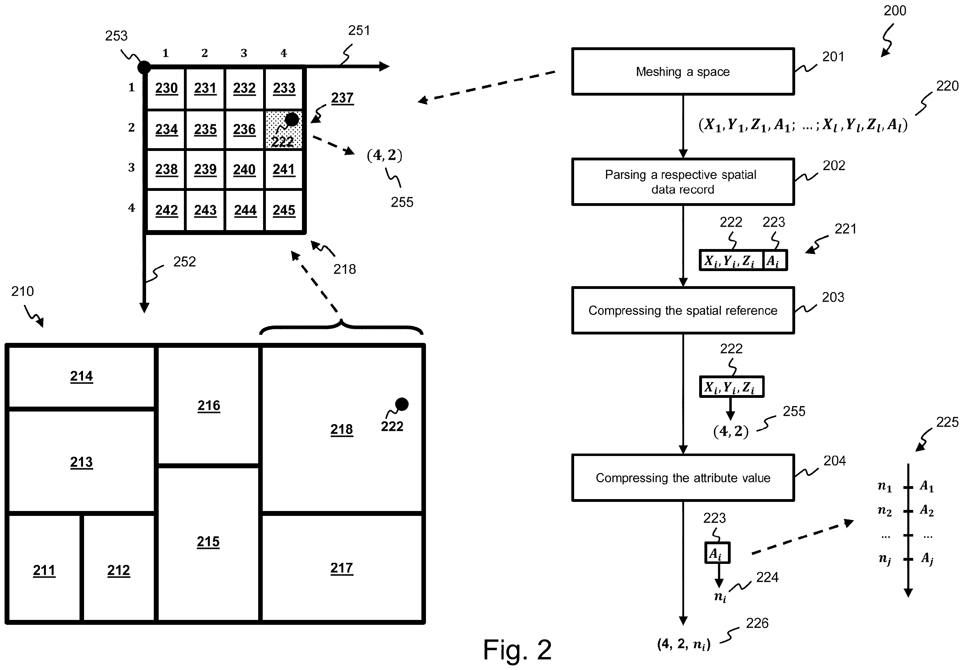

Fig. 2 shows steps 200 according to a computer implemented method for compressing spatial data records 220. All or some of steps 200 may be performed upon digesting spatially referenced data, e.g. when spatial data records 220 are provided or inputted to a spatial analysis software program. It will be apparent that a substantial number of spatial data records may be digested, e.g. at least around a billion of data records. A plurality of spatial data records 220 may be inputted simultaneously by, for example, providing a dataset of spatial data records. Such a dataset may, for example, be a comma-separated values file. Alternatively or complementary, spatial data records 220 may be inputted in a streaming fashion.

A respective spatial data record 221 comprises a spatial reference 222 located within a space 218. The spatial reference 222 characterizes a physical location within the space 218, e.g. by a set of coordinates *Xᵢ*, *Yᵢ*, *Zᵢ* representing longitude, latitude, and elevation on the surface of the Earth, respectively. It will be apparent that the spatial reference 222 may characterize a location based on any coordinate system, e.g. a geographic coordinate system, a geocentric coordinate system, a projected coordinate system, or an engineering coordinate system. Alternatively, the spatial reference 222 may for example be an address.

The respective spatial data record 221 further comprises at least one attribute 223. An attribute 223 is characterized by an attribute type and an attribute value. The attribute type is indicative for a feature of a real-world asset, object, event, or phenomenon, that is described by the attribute 223. The attribute type may for example be a speed, an acceleration, a tire pressure, a name, an identifier, a length, a width, cargo, or a destination. The attribute value 223 is the value of the corresponding feature measured at the physical location of the spatial reference, e.g. 5 km/h for an attribute type 'speed', 1 m/s² for an attribute type 'acceleration', or 2.2 bar for an attribute type 'tire pressure'.

The at least one attribute value may be of any data type, e.g. a Boolean, an integer, a floating point, a fixed point, a character, or a string. Alternatively or complementary, the at least one attribute type may be a timestamp or a temporal reference, indicative for the moment in time that the spatial data record 221 is measured or recorded. In other words, the at least one attribute value 223 may be a timestamp indicative for the time of occurrence of recording the spatial data record 221.

In a fist step 201, space 218 may be meshed in meshing elements 230 - 245. Space 218 may be a portion of a larger space 210, i.e. a subspace of space 210. Space 218 may be a two-dimensional representation of three-dimensional space, e.g. a map of Earth's surface. Space 218 may have any regular or irregular polygon shape such as, amongst others, a rectangular shape, a rhombus shape, a square shape, a kite shape, a parallelogram shape, a trapezoid shape, or a triangular shape. Alternatively, space 218 may be a three-dimensional representation of three-dimensional space, e.g. a polyhedron portion of Earth.

The relative position of the respective meshing elements 230 - 245 is characterized by a relative spatial reference 255 indicative for the position of a meshing element 237 according to a relative reference frame. This relative reference frame may be characterized by a point of reference 253, one or more axes 251, 252, and/or a scale for the one or more axes 251, 252. It will be apparent that while Fig. 2 illustrates a two-dimensional example with two axes 251, 252, a three-dimensional space may be meshed in a similar manner according to a relative reference frame with three axes.

The point of reference 253, also origin, may be an outer end of the meshed space 218, e.g. an outer corner of the meshed space. The axes 251, 252 may extend from the origin 253 along respective outer edges of the meshed space 218. The scale may be defined by the meshing elements along the axes 251, 252. In other words, the units of the respective axes 251, 252 may be expressed in a number of meshing elements. For example, meshing element 232 is the third meshing element along axis 251. In doing so, the relative spatial reference 255 may characterize the relative position of a meshing element by means of one or more integer values.

Relative spatial references may for example have the form (*α*, *β*), wherein *α* is the distance of a meshing element to a first axis 252 expressed in a number of meshing elements, and *β* is the distance of the meshing element to a second axis 251 expressed in a number of meshing elements. For example, the relative spatial reference of meshing element 237 may be (4,2). Alternatively, the relative spatial references may have the form (*δ*), wherein *δ* characterizes the chronological occurrence of the meshing elements 230 - 245 starting from the point of reference 253. For example, the relative spatial references of the first row of meshing elements 230 - 233 may be (1), (2), (3), and (4) respectively; the relative spatial references of the second row of meshing elements 234 - 237 may be (5), (6), (7), (8) respectively; and so on. In doing so, the number of integer values to indicate the position of a meshing element is reduced, thereby reducing the used memory to store the relative spatial reference.

The space 218 may be meshed in meshing elements 230 - 245 having equal surface areas according to a predetermined resolution. The predetermined resolution of the meshing elements may, for example, be characterized by a predetermined shape and dimensions for the meshing elements. The predetermined resolution may be the finest resolution to which the spatial references can be compressed without losing valuable spatial information. In other words, the predetermined resolution may depend on the spatial data records 220 being processed, and the desired insights to be obtained by processing them. The predetermined resolution may be provided by a user of a computer program executing steps 200. The predetermined resolution may be a trade-off between accuracy and processing time. For example, when processing mobility data, the predetermined resolution may define meshing elements having a substantially square surface and a surface area of 1m² as it is unvaluable and computationally more intensive to have more accurate knowledge of the location of the spatial data records.

In a following step 202, the spatial data records 220 are parsed. Parsing the spatial data records 220 refers to recursively processing the respective spatial data records 221 from a dataset, i.e. ingesting the respective spatial data records 221 one by one. Parsing the spatial data records 220 comprises compressing the spatial reference 222, and compressing the attribute value 223 of the respective spatial data records 220.

In step 203, the spatial reference 222 of a respective spatial data record 221 is compressed to the relative spatial reference 255 of the meshing element 237 in which the spatial reference 222 is located. In doing so, a more memory efficient representation of the spatial reference 222 is obtained as the relatively memory intensive spatial reference 222, e.g. floating-point values such as longitude and latitude, are compressed to the more memory efficient relative spatial reference 255, i.e. integer values.

In step 204, the attribute value 223 of the respective spatial data record 221 is compressed to a numerical value 224. This compressing is performed according to an attribute dictionary 225 that comprises a mapping, e.g. key-value pairs, between attribute values *A*₁, ..., *Aⱼ* and numerical values *n*₁, ..., *nⱼ* for a specific attribute type. In other words, a different attribute dictionary 225 is used for each distinct attribute type. This allows compressing attribute values of any data type and any attribute type, i.e. in a data agnostic manner, without substantial data pre-processing.

The at least one attribute dictionary 225 may further be generated while parsing the respective spatial data records 221, i.e. on the fly. In other words, parsing the spatial data records may further comprise generating the at least one attribute dictionary 225. Generating the at least one attribute dictionary 225 may include creating a dictionary for a previously unencountered attribute type and/or adding a mapping, e.g. a key-value pair {*nₓ*, *Aₓ*}*,* for a previously unencountered attribute value to an existing dictionary. The numerical values *nᵢ* may express the order in which attribute values *Aᵢ* are encountered when parsing the spatial data records 220. For example, upon parsing a spatial data record 221 with attribute value *A*₁, a mapping may be added to the respective attribute dictionary 225 that maps *A*₁ to numerical value '1'. Upon parsing a following spatial data record 221 with attribute value *A*₂, different from attribute value *A*₁, a second mapping may be added to the respective attribute dictionary 225 that maps *A*₂ to numerical value '2'. Upon parsing a following spatial data record 221 with attribute value *A*₃, equal to attribute value *A*₁, the mapping is already available in the respective attribute dictionary 225, i.e. numerical value '1'. As such, no mapping is added to the dictionary 225.

Preferably, the at least one attribute dictionary 225 maps attribute values to integer numerical values. For example, an attribute value of '25.2 km/h' may be mapped to integer numerical value '1'. An attribute dictionary 225 may further comprise a mapping between intervals of attribute values and numerical values. A plurality of attribute values within an interval may thus be mapped to the same numerical value. For example, attribute values within interval '[2 km/h, 6 km/h]' may all be mapped to integer numerical value '1'. The size of the intervals determines the granularity of the respective attribute type in the compressed spatial data. In other words, larger mapping intervals reduces the granularity, i.e. the level of detail, captured by the compressed spatial data records 226. The intervals may be predetermined, e.g. provided by a user of a computer program executing steps 200. The attribute dictionary 225 may further comprise a mapping between one or more characters and numerical values. For example, an attribute indicative for the name of a maritime vessel with attribute value 'Serenity' may be mapped to numerical value '1'.

By compressing the respective spatial data records 221, compressed spatial data records 226 are obtained. A compressed spatial data record thus comprises a relative spatial reference 255, and at least one numerical value 224.

Compressing the spatial data records 220 thus reduces the memory used to store the spatial data records 220 as the size of the respective spatial data records 220 is reduced. This has the advantage that it can improve the scalability and interactivity of processing spatial data records 220 as operations on the compressed spatial data records 226 can be performed faster and more efficient. It is a further advantage that the overhead of computing resources and the cost for processing the spatial data records can be reduced. It is a further advantage that the time to insights can be reduced, as any spatially referenced data can be compressed without substantial data pre-processing. It is a further advantage that the at least one attribute value can be reconstructed from the compressed spatial data records, i.e. the compressing of the at least one attribute value is lossless. To this end, the at least one attribute dictionary 225 may be stored in addition to the compressed spatial data records 226. It is a further advantage that steps 200 can efficiently be executed by typical hardware components, e.g. a compute server comprising an Intel i7-7700 Quad Core processor and 32Gb random-access memory, RAM.

It will be apparent that steps 203 and 204 can be performed sequentially or substantially simultaneous, i.e. in parallel. It will further be apparent that steps 203 and 204, when performed sequentially, can be performed in any order. Performing the compressing steps 203 and 204 in parallel can reduce the compression time, i.e. the time required to compress a spatial data record. The compression time may further be reduced by performing the parsing 202, 203, 204 of a plurality of spatial data records 221 in parallel, e.g. by multithreading.

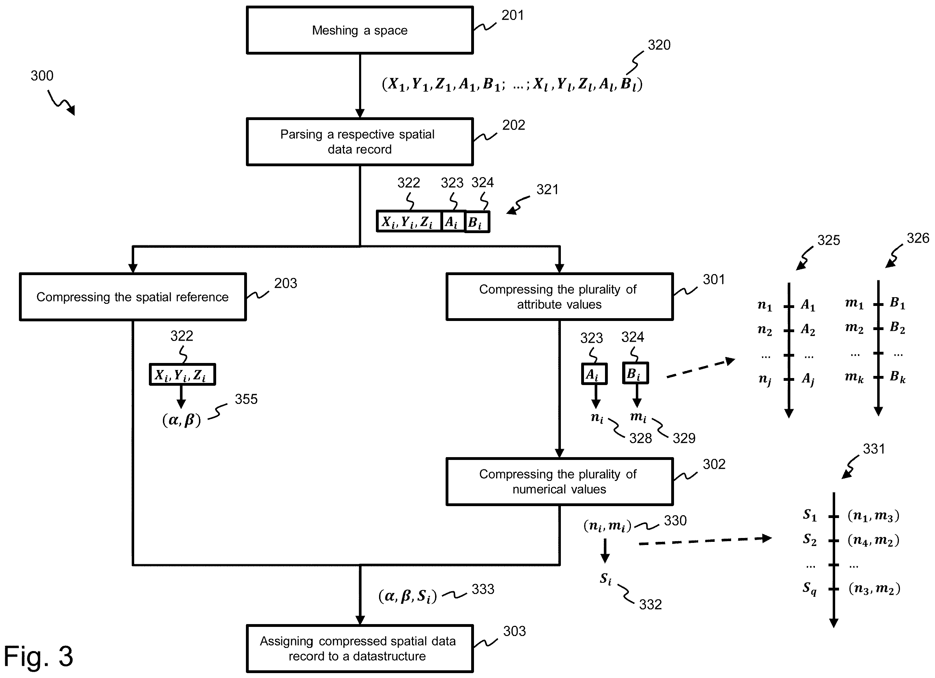

Fig. 3 shows steps 300 of the computer implemented method wherein the spatial data records 320 comprise a plurality of attribute values 323, 324 of different attribute types, according to embodiments. In other words, a respective spatial data record 321 may include information on a plurality of features of a real-world asset. Fig. 3 further shows an example embodiment of the disclosed computer implemented method wherein the compressing 203 of the spatial reference 322 and the compressing 301 of the attribute values 323, 324 is performed substantially simultaneously, i.e. in parallel.

In step 203, the spatial reference 322 may be compressed as described above in relation to Fig. 2. In step 301, the plurality of attribute values 323, 324 may be compressed to respective numerical values *nᵢ* 328 and *mᵢ* 329 according to a plurality of respective attribute dictionaries 325, 326. Each attribute dictionary 325, 326 may comprise a mapping between attribute values and numerical values for a different attribute type, i.e. attribute type *A* and *B.* As such, a set of numerical values (*nᵢ*, *mᵢ*) may be obtained for the respective spatial data record 321.

In a following step 302, the set of numerical values 330 may further be compressed to a state value 332 according to a state dictionary 331. The state dictionary 331 may comprise a mapping between the unique sets of numerical values (*nⱼ*, *mₖ*) and respective state values *S_{q}*. Preferably, the state values 332 are integer values. For example, an attribute value of '5.2 km/h' indicative for the speed of a maritime vessel, and an attribute value 'Serenity' indicative for the name of the maritime vessel may respectively be mapped to numerical values '3' and '5', based on their respective attribute dictionaries 325, 326. Hereafter, the set of numerical values '(3,5)' may further be mapped to the state value '2' based on the state dictionary 331. This can further reduce the memory used to store the spatial data records 320 as the size of the respective spatial data records 321 is further reduced. This has the further advantage that the spatial data records can be searched substantially fast, as evaluating the attribute values of all spatial data records can be avoided by performing a search based on the state values 332 of the spatial data records. For example, when searching for the spatial data records with an attribute value 'Serenity', the search may start by retrieving the state values *S_{q,search}* from the state dictionary 331 that map to a unique set of numerical values (*nⱼ*, *mₖ*) including a numerical value indicative for the attribute value 'Serenity', e.g. a set of numerical values that include the numerical value '5', based on the respective attribute dictionary 326. Hereafter, the retrieved state values *S_{q,search}* may be searched in the compressed spatial data records 333. This search may be substantially faster as the state values use less memory, i.e. are more memory-efficient. This search may further be performed by means of a bit-set, further improving the speed for searching the spatial data records.

State dictionary 331 may further be generated while parsing the respective spatial data records 321, i.e. on the fly. In other words, parsing the spatial data records 320 may further comprise generating the state dictionary 331. This may be achieved in a similar manner as generating the attribute dictionaries 325, 326 while parsing the spatial data records 320, as described above in relation to Fig. 2.

In a next step 303, the compressed spatial data record 333 may be assigned to a data structure associated with the meshed space, e.g. 218 in Fig. 2, in which the spatial reference 321 of the spatial data record is located. The compressed spatial data record 333 may include the relative spatial reference 355, and the state value 332. Alternatively or complementary, the compressed spatial data record 333 may include the attribute values 328, 329. The attribute dictionaries 325, 326 and/or the state dictionary 331 may further be stored. In doing so, the attribute values 323, 324 of the original spatial data records 321 can be reconstructed from the compressed spatial data records 333 when desired. This has the further advantage that it makes the compression of the attribute values lossless.

The data structure for storing compressed spatial data records 333 may, for example, store the compressed spatial data records 333 as key-value pairs. Herein, the relative spatial reference 355 may be the key of a key-value pair, while the at least one numerical value 328, 329 or the state value 332 may be assigned to the value of the key-value pair. For example, a key-value pair of the data structure may be [(*α, β*) ; (*nᵢ*, *mᵢ*)], [(*α*, *β*); (*Sᵢ*)], or [(*α*, *β*); (*nᵢ*, *mᵢ*, *Sᵢ*)] wherein (*α*, *β*) is the key and (*nᵢ*, *mᵢ*), (*Sᵢ*), or (*nᵢ, mᵢ, Sᵢ*) is the value, respectively.

The value of such a key-value pair may further include the numerical values 328, 329 or state values 322 of a plurality of spatial data records 320 having the same relative spatial reference 355, i.e. having a spatial reference 322 located within the same meshing element. Such a key-value pair of the data structure may for example be [(*α, β*); (*nᵢ, mᵢ, nⱼ, mⱼ, nₖ, mₖ*)] or [(*α*, *β*); (*Sᵢ*, *Sⱼ*, *Sₖ*)], wherein subscripts *i*, *j* and *k* are indicative for different spatial data records 321 having a spatial reference 322 located within the same meshing element characterized by relative spatial reference (*α*, *β*) 355.

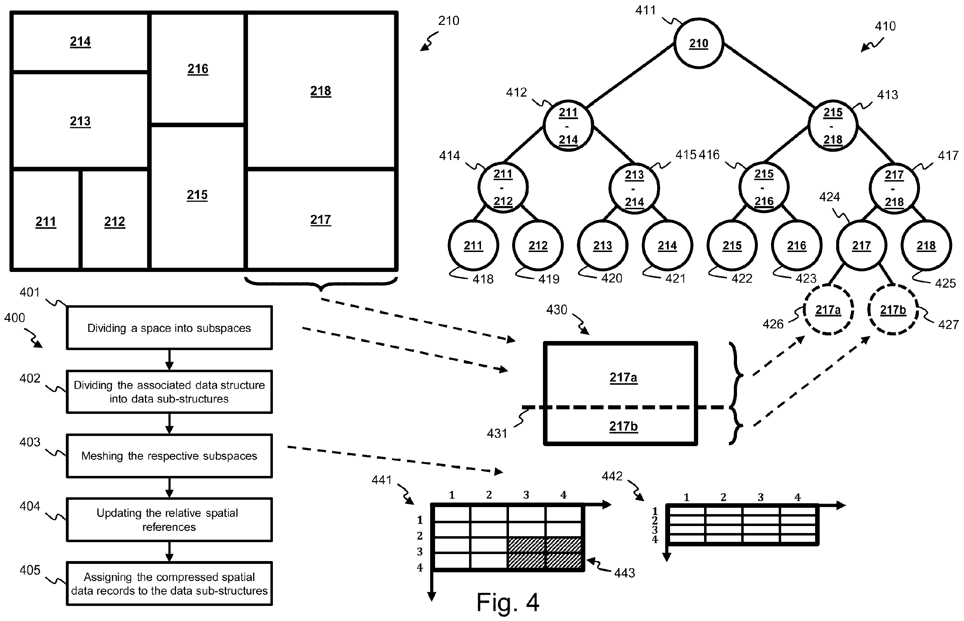

Fig. 4 shows steps 400 of the computer implemented method to divide a space 217 into subspaces 217a, 217b, and to divide the data structure 424 associated with space 217 in data sub-structures 426, 427 associated with subspaces 217a, 217b, according to embodiments. Steps 400 may be performed while parsing the respective spatial data records. In other words, parsing the spatial data records may further comprise steps 400.

The size of data structure 424 associated with space 217 may exceed a size threshold upon assigning a compressed spatial data record to the data structure 424, e.g. upon performing step 303 in Fig. 3. The size threshold may, for example, be a maximum number of compressed spatial data records stored in data structure 424, or a maximum number of bytes stored in data structure 424. Upon exceeding the size threshold, space 217 may be divided into subspaces 217a, 217b in step 401. Space 217 may, for example, be divided into two subspaces 217a, 217b. Alternatively, a space may be divided into more than two subspaces. The obtained subspaces 217a, 217b may preferably be non-overlapping spaces.

Space 217 may be divided 431 into subspaces 217a, 217b based on the spatial distribution of the spatial data records located within the space 217, e.g. such that a substantially similar number of spatial data records are included in the respective subspaces 217a, 217b. Alternatively, space 217 may be divided 431 based on the size of the compressed spatial data records, e.g. such that the total size of the compressed spatial data records located within subspace 217a is substantially equal to the total size of the compressed records located in subspace 217b. Alternatively, space 217 may be divided 431 based on symmetry; based on the meshing elements of space 217, in particular the number of meshing elements; or according to any other space-dividing criterion known to the skilled person.

In a following step 402, data structure 424 may be divided into data sub-structures 426, 427 associated with the respective subspaces 217a, 217b. In other words, data structure 217 may be substituted by two data sub-structures 426, 427. Data structure 217 may be kept in memory in addition to data sub-structures 426, 427, or may be removed from memory. Data sub-structures 426, 427 are thus configured to store the compressed spatial data records comprising spatial references located within the respective subspaces 217a, 217b.

Steps 403, 404, and 405 may then be performed to distribute the compressed spatial data records stored in data structure 424 between the data sub-structures 426, 427. In step 403, the respective subspaces 217a, 217b may be meshed in meshing elements 441, 442, i.e. in a similar manner as described above in relation to Fig. 2 and Fig. 3. In other words, the respective subspaces 217a, 217b may in turn be meshed into meshing elements substantially similar to meshing space 217, i.e. the parent space. The relative position of the meshing elements within the subspaces 217a, 217b may be characterized by relative sub-spatial references.

In a next step 404, the relative spatial references of the compressed spatial data records stored in data structure 424 may be updated with the relative sub-spatial references. Then, in step 405, the updated compressed spatial data records may be assigned to the respective data sub-structures 426, 427. The updated compressed spatial data records may thus comprise a relative sub-spatial reference, and one or more numerical values and/or a state value.

It will be apparent that space 217 may be a subspace of a larger space 210 or parent space. For example, space 217 may have been obtained by starting from space 210, meshing space 210, parsing spatial data records located within space 210, and assigning the compressed spatial data records to data structure 411. In other words, by performing steps 200, 300 illustrated in Fig. 2 and Fig. 3. When the size of data structure 411 exceeds the size threshold, space 210 may be divided in a first subspace including 211 - 214 and a second subspace including 215 - 218, and data structure 411 may be divided in a first data sub-structure 412 and a second data sub-structure, according to steps 401 - 405. Hereafter, parsing spatial data records may resume. The parsing may continue until the size of data sub-structure 412 or data sub-structure 413 exceeds the size threshold, or until all spatial data records are parsed. When, for example, the size of data sub-structure 413 exceeds the size threshold, steps 401 - 405 may be repeated to divide the associated subspace 215 - 218 into a subspace including 215 - 216, a subspace including 217 - 218, and to divide data sub-structure 413 into two respective data sub-structures 416, 417. The subspace including 217 - 218 may further be divided according to steps 401 - 405 to obtain space 217 and the respective data structure 424.

Space 210 may be divided according to a space partitioning tree 410, comprising a root node 411, a plurality of internal nodes 412 - 417, and a plurality of leaf nodes 418 - 425. The nodes of the space partitioning tree 410 may be indicative for the data structures and data sub-structures for storing compressed spatial data records. The space partitioning tree 410 may, for example, be a binary space partitioning tree, a quadtree, an octree, or a k-d tree.

In doing so, a plurality of data sub-structures 418 - 425 may be obtained that store the compressed spatial data records. The subspaces 211 - 218 associated with the data sub-structures 418 - 425 may be meshed in meshing elements according to the predetermined resolution. The obtained data sub-structures 418 - 425 may thus be the finest or lowest spatial compression level of the spatial data records, as the predetermined resolution may be the finest resolution to which the spatial references can be compressed without losing valuable spatial information.

The computer implemented method may further comprise obtaining coarser or higher spatial compression levels of the spatial data records. This may be achieved by aggregating meshing elements of the predetermined resolution, i.e. of the finest spatial compression level, to meshing elements of a lower resolution. In other words, the surface area of meshing elements according to the lower resolution may be larger compared to the surface area of the meshing elements according to the predetermined resolution. For example, subspace 217a may be meshed 441 according to the predetermined resolution. A higher spatial compression level may then be obtained by aggregating meshing elements 443, i.e. grouping four meshing elements of the predetermined resolution to form a meshing element of a lower resolution.

One or more subspaces of the finest compression level may further be aggregated to obtain aggregated subspaces. The aggregated subspaces may include a predetermined number of meshing elements of the lower resolution. Aggregated data sub-structures associated with the aggregated subspaces may further be obtained, the relative spatial references may be updated according to the meshing elements of the lower resolution, and assigned to the aggregated data sub-structures.

This aggregating of meshing elements and data sub-structures may be repeated recursively, thereby obtaining a plurality of spatial compression levels for the same dataset of spatial data records. It is a further advantage that this can improve the efficiency and speed of visualizing the compressed spatial data records as an appropriate spatial compression level can be selected according to the requested digest or visualisation.

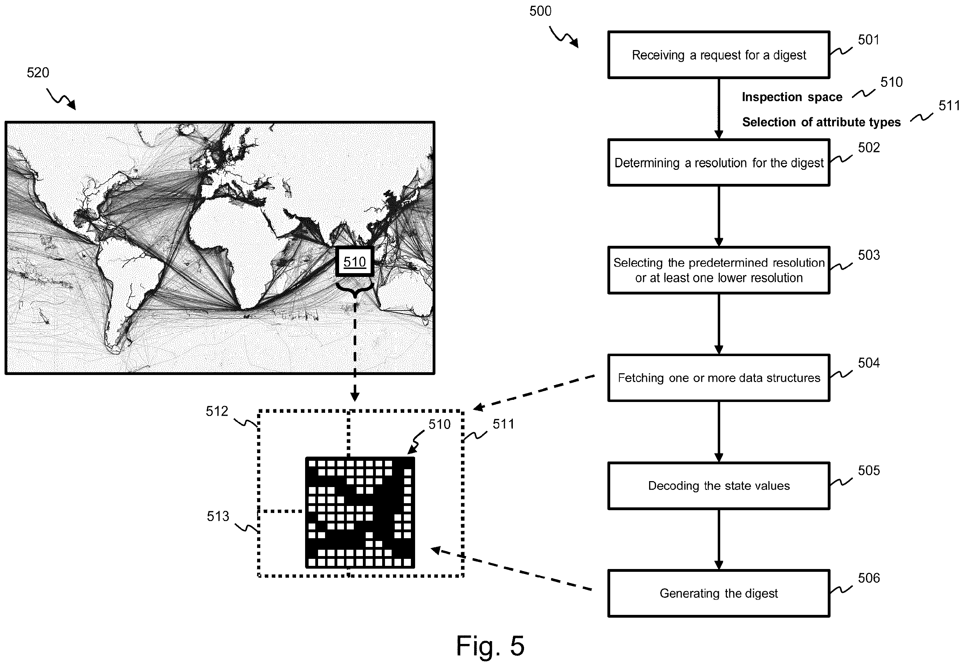

Fig. 5 shows steps 500 of the computer implemented method to generate a requested digest of compressed spatial data records, according to embodiments. Steps 500 may thus be performed to provide at least some of the data processing functionalities of a spatial analysis software program, e.g. as illustrated by 130 in Fig. 1. On the other hand, steps 200, 300, 400 of the computer implemented method described above in relation to Figs. 2 - 4 may be performed to provide at least some of the data ingestion functionalities of a spatial analysis software program, e.g. as illustrated by 120 in Fig. 1.

In a first step 501, a request for a digest of spatial data records located within an inspection space 510 may be received. The inspection space 510 may be a portion of a space 520 in which spatial data records are available. For example, space 520 may be the Earth's surface, or may be space 210 in Fig. 2 and Fig. 4. The requested digest may be a compilation or summary of the spatial data records located within the inspection space 510. The digest may be a visualisation of the spatial data records such as, for example, a point map, a proportional symbol map, a cluster map, a choropleth map, a cartogram map, a hexagonal binning map, a heat map, a topographic map, a flow map, a spider map, a time-space distribution map, or a data space distribution map.

In a following step 502, a resolution for the requested digest may be determined based on the inspection space 510. The resolution may, for example, be based on the dimensions of the inspection space 510. In a next step 503, an appropriate resolution of the meshing elements may be selected based on the determined resolution for the digest. In other words, the appropriate spatial compression level of the spatial data records can be selected according to the requested digest. For example, the finest compression level associated with meshing elements of the predetermined resolution may be selected when the inspection space 510 covers a substantially small portion of space 520, i.e. when a relatively high level of detail is desired or when a relatively zoomed-in visualisation is requested. This may for example be the case when the digest visualizes the maritime flow in a harbour, traffic flow in a small town, or people flow in a city centre. Alternatively, a coarser compression level associated with meshing elements of the at least one lower resolution may be selected when the inspection space 510 covers a substantial portion of space 520, i.e. when a relatively low level of detail is desired or when a relatively zoomed-out visualisation is desired. This may for example be the case when the digest visualizes the maritime flow on global shipping routes, or traffic flow through a country. This can improve the interactivity and scalability of the spatial analysis, as the loading time for generating the digest can be limited when requesting a digest with a large inspection space 510. In other words, loading times for generating digests can be reduced by preventing the rendering of needlessly detailed digests.

In a following step 504, the one or more data structures or data sub-structures associated with the subspaces 511, 512, 513 that at least partially overlap with the inspection space 510 are fetched from storage. In doing so, only the compressed spatial data records that are needed to generate the digest can be retrieved from storage. In other words, generating a digest or visualizing spatially referenced data can be performed more efficiently and faster by only retrieving the data sub-structures associated with the subspaces that at least partially overlap with the inspection space. This has the further advantage that the interactivity of the rendering and visualizing is improved as execution times for obtaining the digest are reduced. Additionally, the attribute dictionaries and/or the state dictionary may be fetched from storage.

In a next step 505, the state values of the retrieved compressed spatial data records may be decoded based on the state dictionary. Alternatively or complementary, the attribute values may further be decoded based on the respective attribute dictionaries.

In a following step 506, the digest may be generated by rendering the numerical values of at least one attribute type on the meshing elements within the inspection space 510, based on the relative spatial references. In other words, the digest may be a raster graphic, e.g. a choropleth map, that visualises the attribute values of at least one attribute type of the spatial data records with a spatial reference located within the inspection space 510. The magnitude of the attribute values may further be visualised by colour maps, or colour scales.

Alternatively, the generated digest may only render the location of the compressed spatial data records, i.e. the relative spatial reference, by marking the respective meshing elements in the inspection space 510. In this case, obtaining the digest can be achieved without decoding the state value or the attribute values. This marking may be binary, i.e. marked or not marked, or this marking may be visualised by a colour scale indicative for the number of spatial data records with a spatial reference located within the meshing element.

The received request may further comprise a selection of attribute types 511 to be rendered or visualised in the digest. The request may thus limit the rendered digest to one or more attribute types of interest, e.g. by only rendering 'speed' or 'acceleration' values, and ignoring other attribute types in the fetched compressed spatial data records. The compressed spatial data records in the fetched data sub-structures may for example be filtered based on a bit-set. Alternatively, the rendered digest may be limited to a range of attribute values of interest.

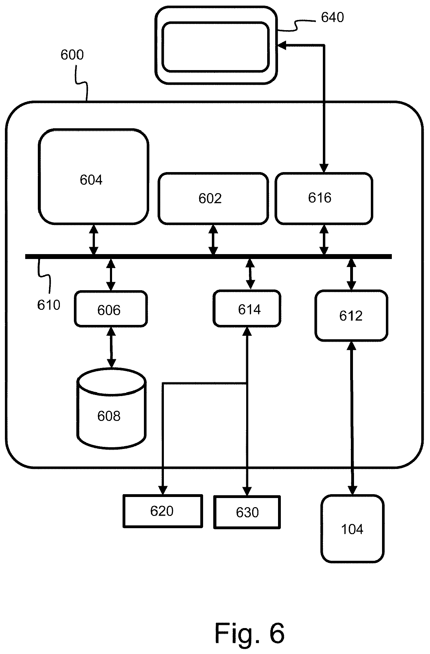

Fig. 6 shows a suitable computing system 600 enabling to implement embodiments of the above described method according to the invention. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems such as for example, amongst others, a database 104. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer implemented method for compressing spatial data records, wherein a respective spatial data record (220) comprises a spatial reference (221) within a space (218), and at least one attribute value (222) of at least one attribute type; the method comprising:
- meshing (201) the space (218) in meshing elements (230 - 245), wherein a relative position of a meshing element is **characterized by** a relative spatial reference (224); and
- parsing (202) the spatial data records, comprising, for a respective spatial data record (220):
- compressing (203) the spatial reference (221) to the relative spatial reference (224) of the meshing element in which the spatial reference is located; and
- compressing (204) the at least one attribute value (222, 223) to at least one respective numerical value (225) according to at least one attribute dictionary (227) comprising a mapping between attribute values and numerical values for an attribute type.

2. The computer implemented method according to claim 1, wherein a respective spatial data record (220) comprises a plurality of attribute values (322, 323) of respective attribute types; and wherein a plurality of numerical values (225, 326) is obtained by compressing the plurality of attribute values; and wherein the parsing further comprises, for a respective spatial data record, compressing the plurality of numerical values to a state value (311) according to a state dictionary (310) comprising a mapping between sets of numerical values and respective state values.

3. The computer implemented method according to claim 2, wherein parsing the spatial data records further comprises generating the at least one attribute (227) dictionary and/or the state dictionary (310).

4. The computer implemented method according to any of the preceding claims, wherein the at least one attribute dictionary (227) further comprises a mapping between intervals of attribute values and numerical values, or between one or more characters and numerical values.

5. The computer implemented method according to any of the preceding claims, wherein meshing (201) a space further comprises meshing the space in meshing elements (230 - 245) having equal surface areas according to a predetermined resolution.

6. The computer implemented method according to any of the preceding claims, wherein parsing the spatial data records further comprises, for a respective spatial data record, assigning (302) the relative spatial reference (224) and the at least one numerical value (225, 326) or, when depending on claim 2, the state value (311) to a data structure associated with the space for storing compressed spatial data records comprising a spatial reference located within the space.

7. The computer implemented method according to claim 6, wherein parsing the spatial data records further comprises, if a size of the data structure associated with the space exceeds a size threshold, dividing (402) a space (218) into subspaces (411, 412), and dividing (403) the data structure associated with the space (218) in data sub-structures associated with the respective subspaces (411, 412) for storing compressed spatial data records comprising a spatial reference located within the respective subspaces.

8. The computer implemented method according to claim 7, wherein dividing a space into subspaces further comprises:
- meshing (404) the respective subspaces in meshing elements, wherein a relative position of a meshing element within a subspace is **characterized by** a relative sub-spatial reference;
- updating (405) the relative spatial references with the relative sub-spatial references; and
- assigning (406) the relative sub-spatial references and the at least one numerical value or, when depending on claim 2, the state value (311) to the data sub-structure.

9. The computer implemented method according to claims 5 and 8, further comprising obtaining relative sub-spatial references according to at least one lower resolution by aggregating meshing elements of the predetermined resolution.

10. The computer implemented method according to claim 7, further comprising:
- receiving (501) a request for a digest of spatial data records (500) located within an inspection space (510);
- fetching (504) one or more data sub-structures associated with the subspaces (511, 512, 513) that at least partially overlap with the inspection space (510); and
- generating (506) the digest by rendering the numerical values of at least one attribute type on the meshing elements within the inspection space based on the relative spatial references.

11. The computer implemented method according to claims 9 and 10, wherein the fetching further comprises:
- determining a resolution for the digest based on the inspection space;
- selecting the predetermined resolution or the at least one lower resolution based on the determined resolution; and
- fetching, based on the selected resolution, one or more data sub-structures, or one or more aggregated data structures.

12. The computer implemented method according to claim 11, wherein the request for a digest further comprises a selection of attribute types to be rendered; and wherein generating the digest is limited to rendering the attribute types included in the selection.

13. A data processing system configured to perform the computer implemented method according to any one of claims 1 to 12.

14. A computer program comprising instructions which, when the program is executed by a computer, cause the computer to perform the computer implemented method according to any one of claims 1 to 12.

15. A computer-readable medium comprising instructions which, when executed by a computer, cause the computer to perform the computer implemented method according to any one of claims 1 to 12.
